# EUROPEAN PATENT APPLICATION

(11) **EP 2 933 561 A1**
(43) Date of publication of application: **21.10.2015**
(21) Application number: 13862678.3
(22) Date of filing: 13.12.2013
(51) Int. Cl.: F23R 3/36, F02C 3/22, F02C 3/24, F02C 7/22, F02C 7/228, F23R 3/28, F23R 3/34

(54) **MULTI-FUEL-CAPABLE GAS TURBINE COMBUSTOR**

(30) Priority: 13.12.2012 JP 2012272585
(71) Applicant: Kawasaki Jukogyo Kabushiki Kaisha, Kobe-shi, Hyogo 650-8670 (JP)
(72) Inventor: OGATA, Masahiro, Akashi-shi Hyogo 673-8666 (JP); ODA, Takeo, Akashi-shi Hyogo 673-8666 (JP); KINOSHITA, Yasuhiro, Akashi-shi Hyogo 673-8666 (JP)
(74) Representative: Von Kreisler Selting Werner - Partnerschaft von Patentanwälten und Rechtsanwälten mbB
(86) International application number: PCT/JP2013/083497
(87) International publication number: WO 2014/092185

(57) **Abstract**

A multi-fuel-capable gas turbine combustor is provided which is able to sufficiently utilize various fuels having a characteristic deviating from a premixing characteristic range suitable for generating a premixed gas, even while maintaining favorable low-emission performance by premixed combustion. The gas turbine combustor includes: a main burner configured to supply a premixed gas containing a first fuel for premixing, to a first combustion region within a combustion chamber to cause premixed combustion; and a supplemental burner configured to supply a second fuel for reheating having a different composition from that of the first fuel, to a second combustion region at a location downstream of the first combustion region within the combustion chamber, to cause diffusion combustion. The first fuel has a premixing characteristic range suitable for generating a premixed gas. The second fuel has a characteristic deviating from the premixing characteristic range.

## Description

### CROSS REFERENCE TO THE RELATED APPLICATION

This application is based on and claims Convention priority to Japanese patent application No. 2012-272585, filed December 13, 2012, the entire disclosure of which is herein incorporated by reference as a part of this application.

### BACKGROUND OF THE INVENTION

### (Field of the Invention)

The present invention relates to a multi-fuel-capable gas turbine combustor which is able to effectively utilize an unused fuel such as a hydrogen-containing fuel even while ensuring low-emission performance.

### (Description of Related Art)

In the field of combustors in gas turbine engines, a technology for securing a low emission performance including a low NOx emission has hitherto been known, which includes, besides a wet type combustor in which water or steam is injected into the combustor, a dry low emission (DLE) combustor in which a pre-mixture formed by mixing fuel with compressed air is injected into a combustion chamber to accomplish a leaned pre-mixture combustion. As the fuel for the DLE combustor, fuels having a characteristic range suitable for generating a premixed gas, such as natural gas, kerosene, or diesel oil, are used. However, gases such as hydrogen have a characteristic range deviating from the above characteristic range, and thus it is difficult to use such gases. Basically, hydrogen gas has a high combustion speed. Thus, if a large amount of hydrogen gas is mixed with the fuel for the DLE combustor, there is the possibility that a phenomenon occurs which is called flashback that flame goes back to a relatively long premixing passage, causing heating or damage, or unstable combustion.

In recent years, it has been desired to effectively utilize, as fuels for a gas turbine combustor, hydrogen gas generated from a chemical plant or the like, and a low-concentration methane fuel gas such as ventilation air methane (VAM) emitted from a coal mine. Meanwhile, a multi-hole co-axial jet burner has been proposed which mixes a hydrogen-containing fuel into natural gas using a special nozzle in a lean premixing type gas turbine combustor (see Patent Document 1). In addition, a gas turbine combustor has been known in which hydrogen gas is supplied from a supplemental burner to the combustor (see Patent Document 2). In the combustor described in Patent Document 2, a main burner employs a diffusion combustion method, not a premixed combustion method, and NO_{X} which is generated in a large amount by diffusion combustion is reduced with hydrogen gas.

### [Related Art Document]

### [Patent Document]

[Patent Document 1] JP Laid-open Patent Publication No. 2011-144972
[Patent Document 2] JP Laid-open Patent Publication No. 2011-075174

### SUMMARY OF THE INVENTION

However, the multi-hole co-axial jet burner of Patent Document 1 has a complicated structure, and, in order to maintain favorable low-emission performance, for example, it is necessary to change fuel allocation to a plurality of fuel nozzles in accordance with a ratio of a hydrogen concentration, whereby control is complicated. On the other hand, when hydrogen gas is introduced from a supplemental burner as in the combustor of Patent Document 2, if a main burner employs the premixed combustion method, the amount of NO_{X} is small, and thus an effect of reduction of NO_{X} with hydrogen gas is limited. Accordingly, in Patent Document 2, the case of using a main burner that employs the premixed combustion method is not assumed. Therefore, Patent Document 2 does not suggest using both the premixed combustion method and the method of introducing hydrogen gas from the supplemental burner.

An object of the present invention is to provide a multi-fuel-capable gas turbine combustor which is able to sufficiently utilize various fuels having characteristics deviating from a premixing characteristic range suitable for generating a premixed gas, even while maintaining favorable low-emission performance by premixed combustion.

In order to achieve the above-described object, a multi-fuel-capable gas turbine combustor according to the present invention includes: a main burner configured to supply a premixed gas containing a first fuel for premixing, to a first combustion region within a combustion chamber to cause premixed combustion; and a supplemental burner configured to supply a second fuel for reheating having a different composition from that of the first fuel, to a second combustion region at a location downstream of the first combustion region within the combustion chamber, to cause diffusion combustion, in which the first fuel has a premixing characteristic range suitable for generating a premixed gas, and the second fuel has a characteristic deviating from the premixing characteristic range.

In the gas turbine combustor, since the first fuel having the premixing characteristic range suitable for generating the premixed gas is supplied to the main burner configured to supply the premixed gas to the first combustion region to cause premixed combustion, flashback, unstable combustion, blowout or the like does not occur, and thus it is possible to maintain favorable low-emission performance. Meanwhile, when an operating range is expanded to the high-output side in accordance with increase of an engine load, the second fuel is supplied from the supplemental burner to the second combustion region. Since the supplemental burner is of a diffusion combustion type, even when the second fuel having a characteristic deviating from the premixing characteristic range suitable for generating the premixed gas is supplied, flashback, unstable combustion, blowout, or the like does not occur. Therefore, as the second fuel, various fuels that are not effectively utilized at present, such as byproduct hydrogen gas generated from a petrochemical plant, an oil refinery, an iron manufacturing facility, or the like, or a low-concentration fuel gas, for example, VAM, can be sufficiently used.

The passage "premixing characteristic range suitable for generating the premixed gas" may include both a range of a combustion speed where flashback does not occur within a premixing passage and a range of a heat value where failure in combustion in a small amount does not occur or overheating in a large amount does not occur. In addition, the tern "different composition" means that a principal component or an element content is different.

In one embodiment of the present invention, the gas turbine combustor may further include a pilot burner configured to inject the first fuel to the first combustion region to cause diffusion combustion. In diffusion combustion, flame is more stable than in premixed combustion having a high air-fuel ratio. Thus, the diffusion combustion is used at the time of starting the gas turbine and at the time of a low load. In addition, even at a high load, by causing combustion in a small amount, it is possible to prevent occurrence of blowout and stably maintain premixed combustion.

In one embodiment of the present invention, the gas turbine combustor may further include an additional supplemental burner configured to supply the first fuel also to the second combustion region to combust the first fuel. Thus, for example, in the case where byproduct hydrogen gas generated from a chemical plant is used as the second fuel, if the second fuel is insufficient due to stop of operation of the chemical plant or the like, the first fuel is supplied from the additional supplemental burner to the second combustion region, whereby it is possible to maintain a required high-output operation.

In one embodiment of the present invention, hydrogen may be used as the second fuel. Thus, it is possible to use effectively utilize hydrogen gas generated from a chemical plant or the like, as a fuel for the combustor.

In the present invention, natural gas can be used as the first fuel, and hydrogen or a hydrogen-containing gas can be used as the second fuel. Thus, it is possible to cause favorable premixed combustion in the first combustion region by using natural gas having a premixing characteristic range suitable for generating the premixed gas. In addition, hydrogen having a characteristic deviating from the required premixing characteristic range is injected from the supplemental burner to the second combustion region to cause diffusion combustion, whereby it is possible to effectively utilize a large amount of hydrogen as a fuel for the combustor.

In one embodiment of the present invention, the gas turbine combustor may further include: a combustion liner that defines the combustion chamber therein; and an introduction pipe provided to the combustion liner and configured to introduce air from outside of the combustion liner into the combustion chamber within the combustion liner, and the supplemental burner may be inserted in a hollow portion of the introduction pipe. Because of introduction of air, the concentration of hydrogen decreases and the combustion temperature decreases. As a result, it is possible to decrease the amount of NO_{X} generated.

In one embodiment of the present invention, lean combustion of the second fuel for reheating may also be caused in the second combustion region. Thus, it is possible to further decrease the amount of NO_{X} generated. Here, "lean combustion" refers to combustion at such a lean degree that an equivalence ratio is equal to or less than 0.5. It should be noted that the equivalence ratio in the lean combustion is adjusted in accordance with a load in a range of greater than 0 and equal to or less than 0.5.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a schematic configuration diagram showing a gas turbine engine to which a gas turbine combustor of the present invention is applied;
Fig. 2 is a schematic longitudinal cross-sectional view showing a gas turbine combustor according to a first embodiment of the present invention, including a fuel supply system for the gas turbine combustor;
Fig. 3 is a characteristic diagram showing a relationship between load change of the gas turbine engine and an amount of a second fuel used in response thereto; and
Fig. 4 is a schematic longitudinal cross-sectional view showing a gas turbine combustor according to a second embodiment of the present invention, including a fuel supply system for the gas turbine combustor.

### DESCRIPTION OF EMBODIMENTS

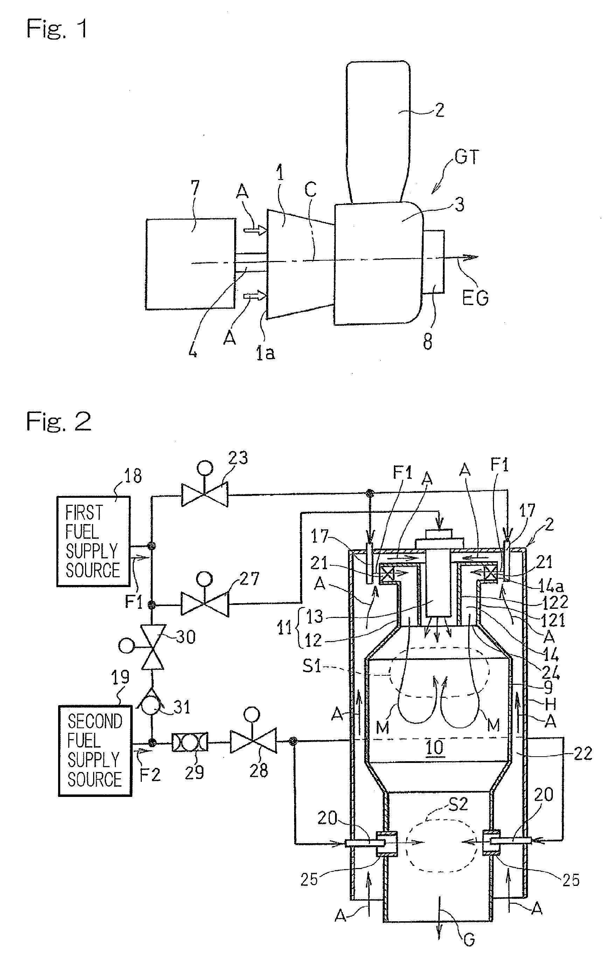

Hereinafter, embodiments of the present invention will be described with reference to the drawings. In the embodiments of the present invention, a gas turbine engine GT to which a gas turbine combustor is applied is of a single-can type as shown in Fig. 1, but may be of a multi-can type. The gas turbine engine GT includes a centrifugal compressor 1 which compresses air A sucked through an air inflow port 1a, a combustor 2 which supplies a fuel to the compressed air A and burns the fuel, and a turbine 3 which is driven by a combustion gas from the combustor 2. The combustor 2 is disposed so as to protrude substantially in a radial direction with respect to an engine rotational axis C. The combustion gas generated in the combustor 2 is introduced to the turbine 3 to rotate the turbine 3 to drive: the centrifugal compressor 1 connected to the turbine 3 via a rotation shaft 4; and a load 7 which is, for example, a generator. An exhaust gas EG having passed through the turbine 3 is discharged through an exhaust duct 8 to the outside.

As shown in Fig. 2, the combustor 2 is of a reverse flow can type in which a combustion gas G and the compressed air A introduced from the centrifugal compressor 1 (Fig. 1) into an air passage 22 flow within the combustor 2 in directions opposite to each other, and a substantially cylindrical combustion liner 9 is housed in a cylindrical housing H. The air passage 22 into which the air A is introduced from the centrifugal compressor 1 is formed between the housing H and the combustion liner 9, and a combustion chamber 10 is formed within the combustion liner 9. A burner unit (nozzle unit) 11 is mounted at a top portion of the combustion liner 9.

The burner unit 11 uses, as a first fuel F1, a fuel such as natural gas or a fuel in which about 5% of hydrogen is mixed with natural gas, or a liquid fuel such as kerosene or diesel oil. The burner unit 11 includes a main burner 12 which injects a premixed gas M, containing the first fuel F1 for premixing supplied from a first fuel supply source 18, to a first combustion region S1 within the combustion chamber 10 to cause premixed combustion; and a pilot burner 13 which directly injects the first fuel F1 to the first combustion region S1 to cause diffusion combustion.

Furthermore, the combustion liner 9 is provided with a diffusion injection type supplemental burner 20 which directly injects a second fuel F2 for reheating which is supplied from a second fuel supply source 19, to a second combustion region S2 at a location downstream of the first combustion region S 1 within the combustion chamber 10, to cause diffusion combustion. A plurality of the supplemental burners 20, for example, 2 to 12 supplemental burners 20 are provided at equal intervals in a circumferential direction of the combustion liner 9. As the second fuel F2, other than natural gas, a fuel having a different composition from that of natural gas, that is, having a different principal component or element content from that of natural gas, such as hydrogen gas, LPG (liquefied petroleum gas), VAM, or a gas obtained by mixing a large amount of hydrogen with natural gas, is used. Hydrogen gas and LPG are different in principal component from natural gas, and VAM contains methane as a principal component which is the same as that of natural gas, but is different in carbon and hydrogen contents from natural gas, for example, VAM contains a large amount of CO₂.

The combustion liner 9 is provided with a plurality of cylindrical introduction pipes 25 through which the air A is introduced into the combustion chamber 10 from the air passage 22 outside the combustion liner 9, and the supplemental burner 20 is inserted in the interior of each introduction pipe 25, that is, in a hollow portion thereof. The air A flows from the outside of the combustion liner 9 into the combustion chamber 10 within the combustion liner 9 through a gap defined between each supplemental burner 20 and the inner circumferential surface of each introduction pipe 25.

The main burner 12 is disposed so as to surround the outer periphery of the pilot burner 13. The main burner 12 includes an annular outer wall 121 and an annular inner wall 122 each having an L cross-sectional shape, and a premixing passage 14 is formed therein between the outer wall 121 and the inner wall 122. An upstream end of the premixing passage 14 is opened radially outward to form an annular air intake port 14a, and a plurality of main fuel nozzles 17 are disposed radially outward of the air intake port 14a and at equal intervals in a circumferential direction of the main burner 12. A portion of each main fuel nozzle 17 that faces the air intake port 14a has a plurality of fuel injection holes (not shown) through which the first fuel F1 is injected toward the air intake port 14a, and a swirler 21 which imparts swirl to inflow air to accelerate premixing of the air with the first fuel F1 is disposed in the air intake port 14a. The pilot burner 13 which is of a diffusion combustion type is disposed in a space within the outer wall 121.

A flow rate of the first fuel F1 supplied from the first fuel supply source 18 is adjusted by a first fuel control valve 23, and then the first fuel F1 is injected from the main fuel nozzles 17 toward the air intake port 14a of the premixing passage 14. The injected first fuel F1 is introduced into the premixing passage 14 together with the compressed air A flowing from the air passage 22 into the air intake port 14a, while swirl is imparted thereto by the swirler 21. Then, the first fuel F1 is premixed while flowing within the premixing passage 14, and is injected as the premixed gas M through an annular premixed gas injection port 24 into the combustion chamber 10.

When the gas turbine engine GT is started, the first fuel control valve 23 is closed, and only a second fuel control valve 27 is opened, so that the first fuel F1 from the first fuel supply source 18 is injected through the second fuel control valve 27 from the pilot burner 13 into the combustion chamber 10, and diffusion combustion of the first fuel F1 is caused by ignition with an ignition plug (not shown). During normal operation, while supply of the first fuel F1 from the pilot burner 13 is continued, premixed combustion of the premixed gas M injected from the main burner 12 into the combustion chamber 10 is caused with flame of the first fuel F1 as pilot flame, thereby forming the first combustion region S1 in an upstream portion of the combustion chamber 10. Each of the main burner 12 and the pilot burner 13 is controlled such that an air-fuel ratio (air flow rate/fuel flow rate) becomes a predetermined value which is suitable therefor.

The first combustion region S1 causes lean premixed combustion of the first fuel F1, thereby decreasing NO_{X}, CO, and the like to achieve low emissions. Therefore, as the first fuel, a fuel having a premixing characteristic range suitable for generating the premixed gas M is used. As the premixing characteristic range, both a range of a combustion speed where flashback does not occur within the premixing passage 14 which is relatively long and a range of a heat value where failure in combustion in a small amount does not occur or overheating in a large amount does not occur, are included. According to experimental results, the range of a combustion speed Mcp is about 32 to 39 cm/s, and the range of a heat value is about 29 to 42 MJ/m³N.

Within the combustion chamber 10 and at the downstream side of the first combustion region S1, the second combustion region S2 is formed by causing diffusion combustion of the second fuel F2 which is supplied from the second fuel supply source 19 and injected from the supplemental burners 20. Since the second fuel F2 is directly injected from the supplemental burners 20, which are of a diffusion combustion type, and diffusion combustion thereof is caused, even when the flow rate of the second fuel F2 changes, flashback into the premixing passage 14, or the like does not occur. Thus, even when a fuel having a characteristic deviating from the premixing characteristic range of the first fuel F 1 is used as the second fuel F2, no problem arises. In addition, as the second fuel F2, a fuel whose composition changes or a fuel having low quality can be also used.

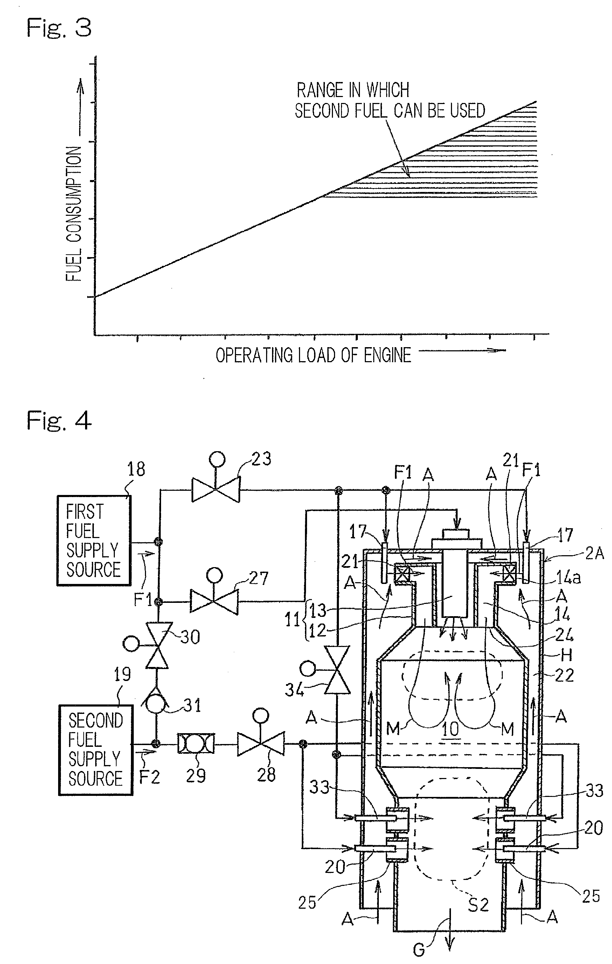

The second combustion region S2 is formed for operating an operating range to the high-output side in accordance with change of an operating load of the gas turbine engine GT. As shown in Fig. 3, when the operating load of the gas turbine engine GT increases to exceed a fixed value, a third fuel control valve 28 in Fig. 2 is adjusted such that the third fuel control valve 28 opens to an opening degree corresponding to change of the operating load, so that a required amount of the second fuel F2 is supplied from the second fuel supply source 19 through a mixer 29 and the third fuel control valve 28 to the supplemental burners 20. As is clear from Fig. 3, the consumption of the second fuel F2 increases as the operating load of the engine GT increases, and thus hydrogen gas or the like which has not been sufficiently utilized at that time can be consumed as a fuel for the combustor 2 in a large amount at a high load. In this case, flame stabilizing performance in the first combustion region S 1 is ensured by the main burner 12 and the pilot burner 13, regardless of the amount of the second fuel F2 supplied to the second combustion region S2.

In the combustor 2, when the second fuel F2 is insufficient, a fourth fuel control valve 30 is opened, the first fuel F1 from the first fuel supply source 18 is supplied through a check valve 31 to the second fuel supply source 19 side, and the first fuel F1 and the second fuel F2 from the second fuel supply source 19 are mixed by the mixer 29 and supplied to the supplemental burners 20. The second fuel F2 is prevented from flowing to the first fuel F1 side by the check valve 31.

In this condition, since the air A within the air passage 22 flows through each introduction pipe 25 into the combustion chamber 10, the concentration of hydrogen from the supplemental burners 20 is lowered, causing a lean combustion state, and the combustion temperature decreases. As a result, it is possible to decrease the amount of NO_{X} generated. It should be noted that since hydrogen gas is diluted with air, the reducing action is weak, but the amount of NO_{X} generated in the first combustion region S1 where premixed combustion is caused is small, and thus an effect of decreasing NO_{X} by the reducing action of the hydrogen gas is not expected. Even when the introduction pipes 25 are not used, it is possible to achieve lean combustion, for example, by forming, in the combustion liner 9 and near the supplemental burners 20, one or more air introduction holes through which the compressed air A within the air passage 22 is introduced into the combustion chamber 10.

Fig. 4 shows a second embodiment of the present invention. In Fig. 4, the components that are the same as or correspond to those in Fig. 2 are designated by the same reference numerals, and the overlap description thereof is omitted. A gas turbine combustor 2A of the second embodiment is different from the gas turbine combustor in Fig. 2 in that additional supplemental burners 33 are provided near the primary supplemental burners 20 at the combustion liner 9 of the first embodiment. A fuel supply system which branches from the fuel supply system to the main burner 12 and is provided with a fifth fuel control valve 34, is connected to the supplemental burners 33. The fifth fuel control valve 34 is opened as necessary, so that the first fuel F1 in the fuel supply system to the main burner 12 is injected from the additional supplemental burners 33 to the second combustion region S2.

In addition, the additional supplemental burners 33 the number of which is the same as the number of the primary supplemental burners 20 are provided at equal intervals such that the positions of the additional supplemental burners 33 and the positions of the primary supplemental burners 20 alternate with each other in the circumferential direction. For example, in the case where four additional supplemental burners 33 and four primary supplemental burners 20 are provided, while the four primary supplemental burners 20 are provided on a circle at intervals of 90 degrees, the four additional supplemental burners 33 are disposed at respective locations upstream or downstream side of the primary supplemental burners 20 and on the same circle at intervals of 90 degrees so as to be 45 degrees out of phase with respect to the primary supplemental burners 20. Thus, in the case where both the additional supplemental burners 33 and the primary supplemental burners 20 are used, it is possible to make the concentrations of the first fuel F1 and the second fuel F2 uniform in the second combustion region S2 to achieve a favorable combustion state.

In the gas turbine combustor 2A of the second embodiment, the same advantageous effects as described in the first embodiment are obtained. In addition, if a situation where it is made impossible to use hydrogen gas, which is the second fuel F2, occurs due to stop of operation of a chemical plant or the like, the fifth fuel control valve 34 is opened, so that the first fuel F1 branched from the fuel supply system to the main burner 12 is injected through the supplemental burners 33 into the combustion chamber 10, whereby it is possible to stably maintain the second combustion region S2. If the second fuel F2 is insufficient, both the primary supplemental burners 20 and the additional supplemental burners 33 are operated to supply the first fuel F1 and the second fuel F2 into the combustion chamber 10.

In the case where natural gas is used as the first fuel, each primary supplemental burner 20 is designed to have a small burner diameter corresponding to natural gas having a small volume. It is to be noted that since hydrogen gas has a larger volume per unit heat value than that of natural gas, when the primary supplemental burners 20 are used for injecting hydrogen gas, it is not possible to inject a required amount of hydrogen gas. On the other hand, in the second embodiment, since the additional supplemental burners 33 for hydrogen gas are provided, by designing each supplemental burner 33 to have a large burner diameter corresponding to the volume of hydrogen gas, it is possible to inject a required amount of hydrogen gas when hydrogen gas is injected as the second fuel F2.

According to analysis performed by the inventors, in the gas turbine combustor 2A in which the supplemental burners 20 and the main burner 12 which employs a premixed combustion method are used in combination, the ratio of the second fuel F2 that does not have an adverse effect on low-emission performance by the main burner 12 is about 30% of the total fuel in terms of heat value. In this case, in the gas turbine combustor 2A of the second embodiment, when the second fuel F2 injected from the primary supplemental burners 20 is defined as 100% hydrogen gas and the heat value of hydrogen gas is set at 1/4 of that of natural gas which is the first fuel F1, the volume ratio between the first fuel F1 (natural gas) and the second fuel F2 (hydrogen gas) is 7:12 in terms of volumetric flow rate allocation. That is, the first fuel F1 accounts for 36.84% (7/19), and the second fuel F2 accounts for 63.15% (12/19).

In the case where, as in the conventional art, hydrogen gas, which is the second fuel F2, is mixed with natural gas, which is the first fuel F1, and is used for premixed combustion, if avoiding flashback or unstable combustion is considered, whereas the upper limit of the mixing ratio of the second fuel F2 is about 5% in volume ratio, hydrogen gas, which is the second fuel F2, can account for about 60% of the total fuel in the present invention. Therefore, it is possible to effectively utilize hydrogen gas, which cannot be sufficiently utilized in the conventional art, as the second fuel for the gas turbine combustor 2A in a large amount.

Although the embodiments have been described above with reference to the accompanying drawings, those skilled in the art will readily conceive numerous changes and modifications within the framework of obviousness upon the reading of the specification herein presented of the present invention. Accordingly, such changes and modifications are to be construed as included in the scope of the present invention as delivered from the claims annexed hereto.

### [Reference Numerals]

- 10: Combustion chamber
- 12: Main burner
- 13: Pilot burner
- 20: Supplemental burner
- 25: Introduction pipe
- 33: Additional supplemental burner
- S1: First combustion region
- S2: Second combustion region
- M: Premixed gas

## Claims

1. A gas turbine combustor comprising:
a main burner configured to supply a premixed gas containing a first fuel for premixing, to a first combustion region within a combustion chamber to cause premixed combustion; and
a supplemental burner configured to supply a second fuel for reheating having a different composition from that of the first fuel, to a second combustion region at a location downstream of the first combustion region within the combustion chamber, to cause diffusion combustion,
wherein the first fuel has a premixing characteristic range suitable for generating a premixed gas, and
the second fuel has a characteristic deviating from the premixing characteristic range.

2. The gas turbine combustor as claimed in claim 1, further comprising a pilot burner configured to inject the first fuel to the first combustion region to cause diffusion combustion.

3. The gas turbine combustor as claimed in claim 1 or 2, further comprising an additional supplemental burner configured to supply the first fuel to the second combustion region to combust the first fuel.

4. The gas turbine combustor as claimed in any one of claims 1 to 3, wherein the second fuel is hydrogen.

5. The gas turbine combustor as claimed in any one of claims 1 to 3, wherein the first fuel is natural gas, and the second fuel is hydrogen or a hydrogen-containing gas.

6. The gas turbine combustor as claimed in claim 4 or 5, further comprising a combustion liner that defines the combustion chamber therein, and an introduction pipe provided in the combustion liner and configured to introduce an air from outside of the combustion liner into the combustion chamber within the combustion liner, wherein the supplemental burner is inserted in a hollow portion of the introduction pipe.

7. The gas turbine combustor as claimed in any one of claims 1 to 6, wherein lean combustion of the second fuel for reheating is caused in the second combustion region.
